# EUROPEAN PATENT APPLICATION

(11) **EP 4 850 979 A1**
(43) Date of publication of application: **09.12.2026**
(21) Application number: 25747896.6
(22) Date of filing: 24.01.2025
(51) Int. Cl.: B60N 2/28

(54) **CHILD SAFETY SEAT**

(30) Priority: 02.02.2024 CN 202410154127
(71) Applicant: Wonderland Switzerland AG, 6312 Steinhausen (CH)
(72) Inventor: GUO, Zhengwen, Dongguan, Guangdong 523648 (CN); ZHANG, Xiaojian, Dongguan, Guangdong 523648 (CN); XU, Hongbin, Dongguan, Guangdong 523648 (CN)
(74) Representative: Pfenning, Meinig & Partner mbB
(86) International application number: PCT/CN2025/074994
(87) International publication number: WO 2025/162328

(57) **Abstract**

A child safety seat according to the present disclosure includes a base; a carrier detachably connected to the base; wherein the base is provided with at least one first connecting member and at least one second connecting member operatively engaged to the carrier respectively; an unlocking member; a sliding member connected to the unlocking member and capable of being driven by the unlocking member to slide along a body of the base to drive the first connecting member to disengage with the carrier; and at least one linkage member which is connected between the sliding member and the second connecting member, and capable of being driven by the sliding member to drive the second connecting member to disengage with the carrier.

## Description

### TECHNICAL FIELD

The present disclosure relates to a child safety seat.

### BACKGROUND

Child safety seats are usually installed in vehicles such as automobiles, so as to provide a safe and comfortable riding environment for children. In order to stably install a child safety seat in an automobile, the child safety seat usually includes a base and a carrier (such as a seat or a sleeping basket) connected to the base, in which the base is used for being installed to the automobile, and the carrier is used for a child to sit thereon. Moreover, since the seat may be detached from the base, the user may directly remove the carrier and the child thereon from the base when carrying the child. The existing child safety seat has a large number of parts in the base, especially in a connection structure between the base and the carrier, causing unnecessary weight increase. Thus, it is desirable to provide a novel connection structure to reduce the number of parts.

On the other hand, it is desirable that the base of the child safety seat has an adjustment structure to allow an angle between the base and a vehicle seat to be adjusted. Moreover, it is desirable that the adjustment structure of the base has a structure that is convenient for the user to operate.

In addition, the child safety seat is usually provided with a connecting strap to connect the base to the vehicle seat. In some designs, the connecting strap extends from above the base of the child safety seat through the base to below the base, and is connected to the vehicle seat. In this case, it is desirable to provide a limiting device to limit a movement range of the connecting strap with respect to the base. Moreover, it is desirable that the base of the child safety seat provide a receiving function so as to properly receive the connecting strap and an anchoring joint of the connecting strap when the connecting strap is not connected to the vehicle seat.

### SUMMARY

A child safety seat according to the present disclosure includes a base; a carrier detachably connected to the base; wherein the base is provided with at least one first connecting member and at least one second connecting member operatively engaged to the carrier respectively; an unlocking member; a sliding member connected to the unlocking member and capable of being driven by the unlocking member to slide along a body of the base to drive the first connecting member to disengage with the carrier; and at least one linkage member which is connected between the sliding member and the second connecting member, and capable of being driven by the sliding member to drive the second connecting member to disengage with the carrier.

In an embodiment, the sliding member and the linkage member are pivotally connected with each other, and the sliding member slides along the body of the base and drives the linkage member to slide along the body of the base, so that sliding of the sliding member along the body of the base is converted into synchronous rotation of the first connecting member and the second connecting member relative to the body to disengage with the carrier.

In an embodiment, the sliding member is disposed at a lateral center of the base, and the sliding member is capable of being driven at its front end by the unlocking member to slide along the body of the base, and then drives the first connecting member to rotate at its middle portion in a longitudinal direction, and synchronously drives two linkage members that are horizontally parallel to each other at its rear end.

In an embodiment, the sliding member and the linkage member are connected at an angle.

In an embodiment, the sliding member includes a longitudinal part and a lateral part, and one end of the longitudinal part is connected to a middle of the lateral part.

In an embodiment, an end of the longitudinal part away from the lateral part is connected to the unlocking member, and two ends of the lateral part are connected to two linkage member respectively.

In an embodiment, the longitudinal part is provided with an opening penetrating vertically, and the first connecting member extends through the opening.

In an embodiment, the body of the base includes an upper cover and a lower cover, the first connecting member is disposed on the upper cover, and the second connecting member, the unlocking member, the sliding member and the linkage member are respectively disposed on the lower cover.

In an embodiment, one first connecting member is disposed at a front portion of the base, and two second connecting members are disposed in parallel at a rear portion of the base.

In an embodiment, the first connecting member is disposed at a lateral center of the base.

In an embodiment, the unlocking member includes an unlocking part which is capable of being operated from outside of the base to rotate the unlocking member relative to the body of the base; an unlocking chute, in which an unlocking pin is disposed at a first end of the sliding member and is slidable in the unlocking chute, so that rotation of the unlocking member relative to the body is converted into sliding of the sliding member along the body.

In an embodiment, the first connecting member is pivotally connected to the body of the base through a lateral first shaft and includes a first hook part; and the sliding member includes a driving part connected to the first connecting member, and the first hook part and the driving part are located at opposite sides of the first shaft.

In an embodiment, the driving part is disposed between two ends of the longitudinal part and extends downward.

In an embodiment, the base includes a first driving rod, which is disposed parallel to the first shaft and connected below the first shaft. When the sliding member slides relative to the body, the driving part drives the first connecting member through the first driving rod to disengage with the carrier.

In an embodiment, the longitudinal part is connected to the unlocking member through the unlocking pin; a contact point between the driving part and the first driving rod and the unlocking pin are both located at a lower side of the longitudinal part and have approximately the same height in a vertical direction.

In an embodiment, the contact point between the driving part and the first driving rod and the unlocking pin are both located at the lateral center of the base in a lateral direction.

In an embodiment, the first connecting member includes the first hook part that opens forward, and the sliding member includes the driving part that opens forward.

In an embodiment, a first holding member is connected between the first driving rod and the body of the base, and applies a biasing force on the first connecting member, and a direction of the biasing force is opposite to a direction in which the sliding member is driven by the unlocking member to slide.

In an embodiment, the base includes at least one second driving rod; two ends of the linkage member are respectively connected to the sliding member and the second driving rod, so that when the sliding member slides relative to the body of the base, the linkage member drives the second connecting member through the second driving rod to disengage with the carrier.

In an embodiment, the second connecting member is pivotally connected to the body of the base through a lateral second shaft and includes a second hook part; and the second driving rod is disposed parallel to the second shaft, and the second driving rod and the second hook part are located at the same side of the second shaft.

In an embodiment, a second holding member is connected between the second driving rod and the body of the base, and applies a biasing force on the second driving rod, and a direction of the biasing force is opposite to a direction in which the sliding member is driven by the unlocking member to slide.

In an embodiment, the first connecting member includes a first hook part at its upper end, and the second connecting member includes a second hook part at its upper end; when the sliding member is driven by the unlocking member to slide, the first hook part and the second hook part rotate in opposite directions to unlock the carrier.

In an embodiment, the child safety seat further includes a connecting strap for connecting the base to a vehicle seat, wherein the base is provided with a limiting channel through which the connecting strap passes, and the limiting channel connects the connecting strap to the base.

In an embodiment, the limiting channel is provided by a limiting member disposed on the base.

In an embodiment, the limiting member has two ends and a middle section located between the two ends, and the two ends are connected to an upper surface of the base, so that the limiting channel is formed between the middle section and the upper surface of the base.

In an embodiment, the upper surface of the base is provided with two upper surface limiting holes, and the two ends of the limiting member are respectively fixed to the two upper surface limiting holes.

In an embodiment, the base is provided with a gripper and a gripper groove which is capable of being covered by the gripper, and the limiting member has two ends and a middle section located between the two ends, and the two ends are fixed to the gripper groove, such that the limiting channel is formed between the middle section and a bottom surface of the gripper groove.

In an embodiment, the bottom surface of the gripper groove is provided with two gripper groove limiting holes, and the two ends of the limiting member are respectively fixed to the two gripper groove limiting holes.

In an embodiment, the base is provided with a penetrating opening penetrating through the base, and the connecting strap is capable of passing through the penetrating opening from the upper surface of the base to a bottom portion of the base.

In an embodiment, an end of the connecting strap is provided with an anchoring joint which is capable of being engaged with a corresponding fitting on the vehicle seat, and a bottom portion of the base is provided with a receiving groove which is capable of receiving the anchoring joint therein.

In an embodiment, a receiving engagement rod is provided in the receiving groove, and an engaging hook of the anchoring joint is capable of being engaged to the receiving engagement rod.

In an embodiment, an end of the receiving engagement rod connected to the receiving groove is thicker than a middle portion of the receiving engagement rod.

A child safety seat according to the present disclosure includes a base; a carrier detachably connected to the base; wherein the base is provided with: at least one first connecting member and at least one second connecting member, which are capable of being operatively engaged with the carrier respectively; an unlocking member; a sliding member connected to the unlocking member and capable of being driven by the unlocking member to slide along a body of the base to drive the first connecting member to rotate in a first direction to disengage with the carrier; and at least one linkage member which is connected between the sliding member and the second connecting member, and is capable of being driven by the sliding member to slide along the body of the base to drive the second connecting member to rotate in a second direction to disengage with the carrier.

A child safety seat according to the present disclosure includes a base, wherein the base includes an adjusting member movable between at least an extended position and a retracted position relative to the body of the base; an engaging member capable of keeping the adjusting member in the extended position or the retracted position; and an operating member capable of operating the engaging member to enable the engaging member to hold the adjusting member or release the adjusting member.

In an embodiment, one end of the adjusting member is rotatably connected to the body of the base, and the other end of the adjusting member is provided with at least one blocking part, and the blocking part respectively corresponds to the extended position or the retracted position; and the engaging member is capable of being engaged with any one of the blocking parts to keep the adjusting member in the extended position or the retracted position.

In an embodiment, a plurality of blocking parts are arranged along a rotating direction of the adjusting member.

In an embodiment, the adjusting member is connected to the body of the base through a first pivot part and a second pivot part which are opposite to each other; the first pivot part is pillar-shaped; the second pivot part includes a pivot shaft extending opposite to the first pivot part; an extending part extending radially outward from a periphery of the pivot shaft; and a protruding part extending from an end of the extending part away from the pivot shaft, the protruding part and the pivot shaft are located at two sides of the extending part respectively.

In an embodiment, the body of the base has a circular hole on a side thereof connected to the adjusting member and a special-shaped groove on the opposite side thereof, and the special-shaped groove is disposed to allow the second pivot part to slide into the special-shaped groove from outside of the base and keep the pivot shaft of the second pivot part rotating in the special-shaped groove in a state that the first pivot part of the adjusting member is inserted into the circular hole.

In an embodiment, the special-shaped groove includes a guide part extending vertically to outside of the base and engaging with the protruding part of the second pivot part to prevent the second pivot part from being disengaged from the special-shaped groove; and an accommodating part extending from the guide part in a longitudinal direction and accommodating the pivot shaft of the second pivot part.

In an embodiment, the engaging member is rotatably connected to the body of the base, and includes an arm connected to the operating member so as to be driven by the operating member; and an engaging part which is capable of being engaged with the blocking part of the adjusting member.

In an embodiment, the adjusting member and the engaging member are configured to rotate relative to the body of the base about a lateral axis respectively, and the engaging part extends in a lateral direction.

In an embodiment, the operating member includes an operating part which is capable of being operated from outside of the base; and a transmission rod engaged to the arm of the engaging member to drive the engaging member.

In an embodiment, the operating member is disposed to move vertically relative to the body of the base to drive the engaging part to rotate in a direction away from the adjusting member relative to the body of the base.

### BRIEF DESCRIPTION OF THE DRAWINGS

Embodiments of the present disclosure will be described with reference to exemplary views, in which:
FIG. 1 is a perspective view of a base of a child safety seat according to the present disclosure from an angle;
FIG. 2 is a perspective view of the base of the embodiment of FIG. 1 from another angle;
FIGS. 3A and 3B are partial enlarged views of part A and part B in FIG. 2, respectively;
FIG. 4 is a perspective view of a carrier of the child safety seat according to the present disclosure from an angle;
FIG. 5 is a perspective view of the carrier of the embodiment of FIG. 4 from another angle;
FIGS. 6 to 8 are perspective views of the base of the embodiment of FIG. 1 from different angles respectively, in which an upper cover is hidden to show the internal mechanism thereof;

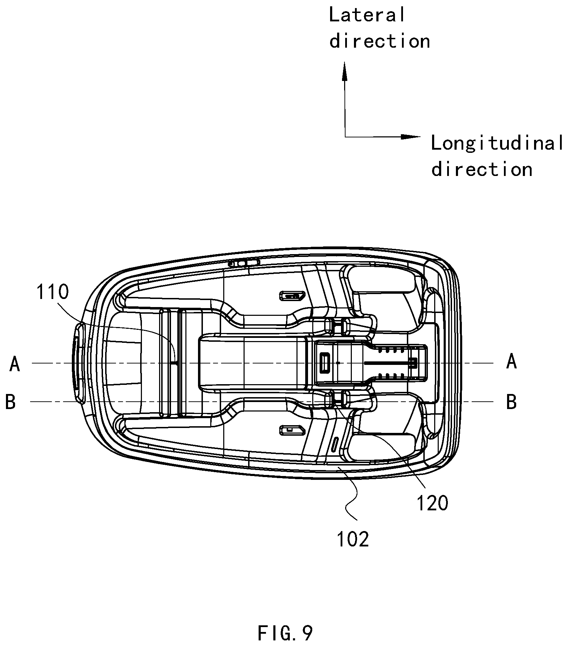

FIG. 9 is a top view of the base of the embodiment of FIG. 1, and FIGS. 10A and 10B are sectional views taken along line A-A and line B-B in FIG. 9, respectively;
FIG. 11 is a bottom perspective view of the base of the embodiment of FIG. 1;
FIGS. 12A and 12B are side views of the base of the embodiment of FIG. 1, showing an adjusting member in a retracted position and an extended position respectively;

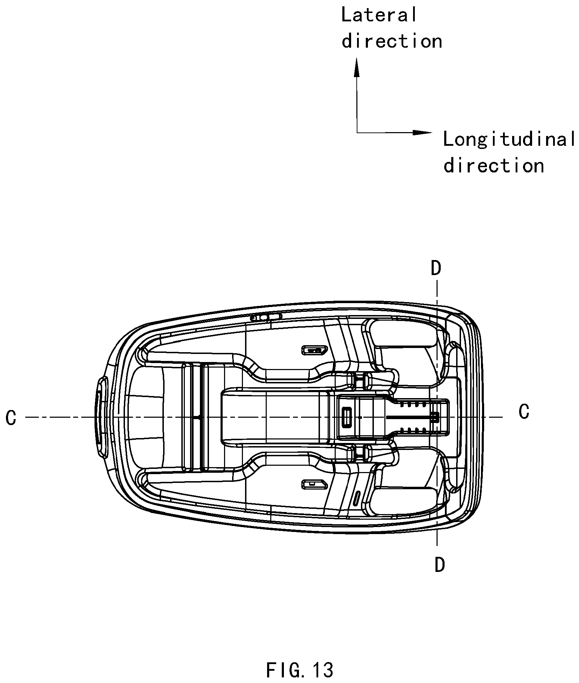

FIG. 13 is a top view of the base of the embodiment of FIG. 1, and FIGS. 14A and 14B are sectional views taken along the line C-C and the line D-D in FIG. 13, respectively;
FIG. 15 is a perspective view of a engaging member according to the present disclosure;
FIG. 16 is a perspective view of the adjusting member according to the present disclosure;
FIG. 17 is a perspective view of the base of the embodiment of FIG. 1, in which a lower cover is hidden to show the internal structure thereof;
FIGS. 18A and 18B respectively show partially side sectional views of cooperation between pivot parts on both sides of the adjusting member and the base;
FIG. 19 is a perspective view of the base of the child safety seat according to the present disclosure from an angle, in which a first embodiment of the limiting member according to the present disclosure is shown;
FIG. 20 is a perspective view of the base of the embodiment of FIG. 19 from another angle, in which a connecting strap is hidden;
FIG. 21 is a perspective view of the base of the embodiment of FIG. 19 from another angle, in which the connecting strap and a receiving groove are shown;
FIG. 22 is a bottom view of the base of the embodiment of FIG. 19, in which the connecting strap is hidden;
FIG. 23 is a perspective view of the base of the child safety seat according to the present disclosure from an angle, in which a second embodiment of the limiting member according to the present disclosure is shown;
FIG. 24 is a top view of the base of the embodiment of FIG. 23, in which a gripper is in a closed position;
FIG. 25 is a top view of the base of the embodiment of FIG. 23, in which the gripper is in an open position.

List of reference numerals
100 base
   101 upper cover
   102 lower cover
   103 top rod
   104 first connecting groove
   105 second connecting groove
   106 special-shaped groove
      106a guide part
      106b accommodating part
   107 circular hole
   110 first connecting member
      111 first hook part
   120 second connecting member
      121 second hook part
   130 unlocking member
      131 unlocking part
      132 unlocking chute
      133 unlocking pin
   140 sliding member
      141 first end
      142 second end
      143 driving part
      144 longitudinal part
         144a opening
      145 lateral part
   150 linkage member
      151 front end
      152 rear end
   155 fixing seat
   160 adjusting member
      162 first pivot part
      163 second pivot part
         163a pivot shaft
         163b extending part
         163c protruding part
      164 blocking part
   170 operating member
      171 operation part
      172 transmission rod
   175 engaging member
      176 arm
      177 engaging part
   181 upper surface
      181a limiting hole
   182 penetrating opening
   183 receiving groove
   184 receiving rod
   191 first holding member
   192 second holding member
   193 first shaft
   194 second shaft
   195 unlocking member shaft
   196 first driving rod
   197 second driving rod
   198 first elastic member
   199 second elastic member
200 connecting strap
   210 anchoring joint
   211 engaging hook
300 limiting member
   301 end
   302 middle section
410 gripper
420 gripper groove
   421 bottom surface
   422 gripper groove limiting hole
500 carrier
   510 sitting part
   520 first crossbar
   530 second crossbar

### DETAILED DESCRIPTION

Although the present disclosure is illustrated and described herein with reference to specific embodiments, the present disclosure should not be limited to the details as shown. Rather, various modifications may be made to these details within the scope of equivalents of the claims without departing from the present disclosure.

The descriptions of directions such as "front", "rear", "upper" and "lower" therein are only for the convenience of understanding, and the present disclosure is not limited to these directions, but can be adjusted according to the actual situations.

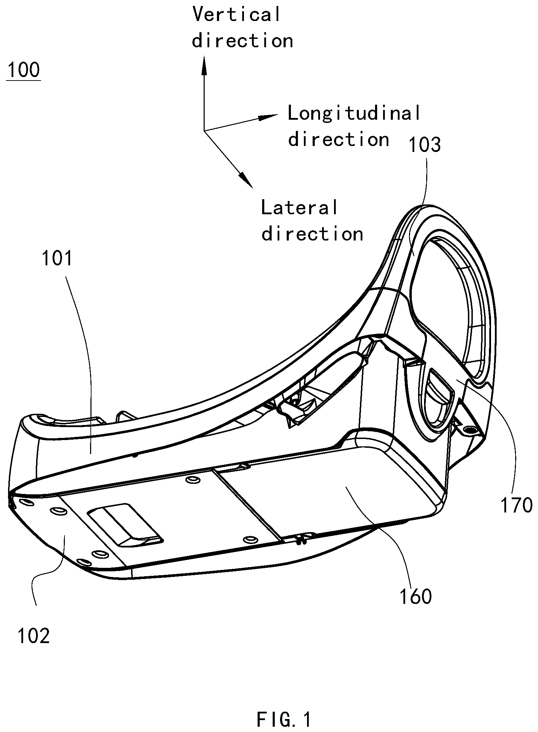

A base 100 of a child safety seat according to the present disclosure is described as a whole with reference to FIGS. 1 to 2.

The base 100 comprises an upper cover 101 and a lower cover 102. It should be understood that the upper cover 101 and the lower cover 102 may be an integral component, and thus the upper cover 101 and the lower cover 102 are collectively referred to as a body of the base 100. Components provided to the upper cover 101 or the lower cover 102 described below can be understood as being provided to the body of the base 100.

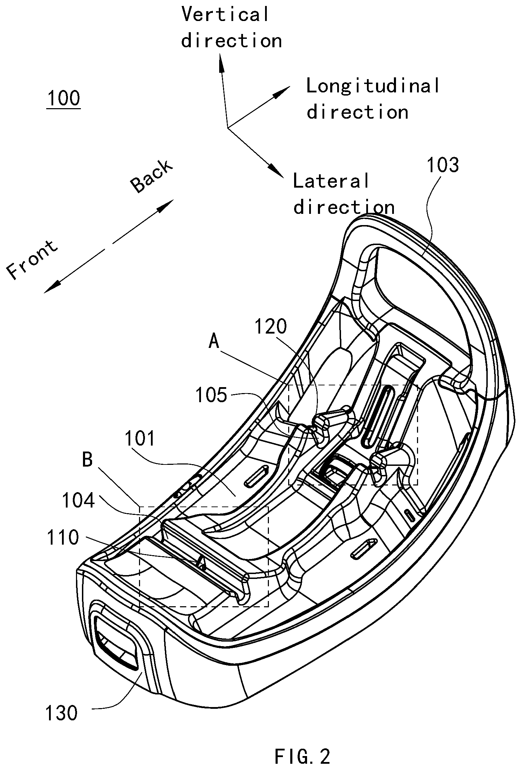

A rear end of the base 100 (i.e., a right side in FIGS. 1 and 2) abuts against a backrest of a vehicle seat. The rear end of the base 100 is provided with a top rod 103, which is specifically disposed at an upper part of the rear end of the upper cover 101. The top rod 103 abuts against the backrest of the vehicle seat so that the base 100 can be stably installed to a vehicle. The upper cover 101 of the base 100 is provided with a first connecting groove 104 and a second connecting groove 105 extending in a lateral direction, and these two connecting grooves are arranged in a longitudinal direction (i.e., a front-rear direction).

The base 100 is provided with at least one first connecting member 110 and at least one second connecting member 120. The first connecting member 110 and the second connecting member 120 are respectively at least partially disposed in the base 100, and are exposed above the upper cover 101 through the first connecting groove 104 and the second connecting groove 105.

The front of the base 100 is provided with an unlocking member 130, and the user can control the first connecting member 110 and the second connecting member 120 through the unlocking member 130, which will be described in detail below.

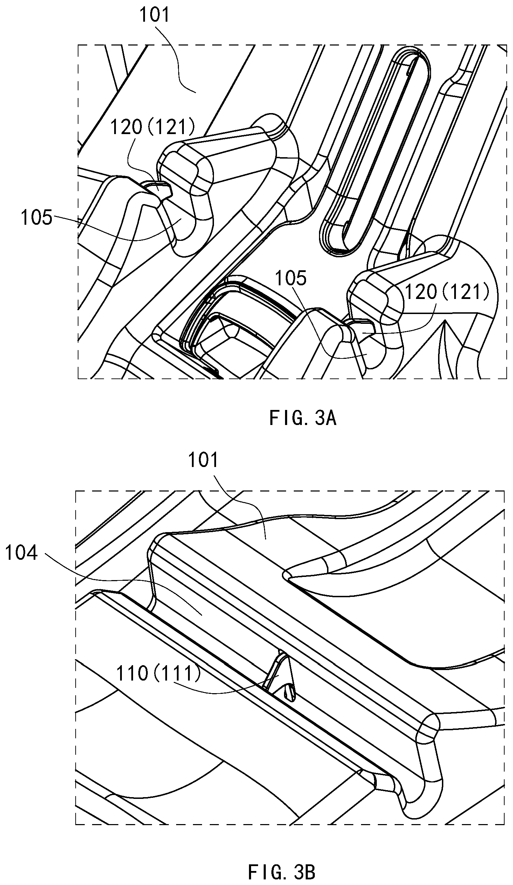

Referring to FIG. 3A, the second connecting groove 105 of this embodiment is vertically recessed from an upper surface of the upper cover 101, and the second connecting groove 105 is divided into two sections arranged in the lateral direction. That is, two sections of the second connecting groove 105 are respectively disposed on left and right sides of the base 100. In this embodiment, two second connecting members 120 are respectively disposed at the two sections of the second connecting groove 105. In other embodiments, the second connecting groove 105 is a continuous section and extends over the entire lateral dimension of the upper cover 101, and a single or more second connecting members 120 may be disposed at any lateral position of the second connecting groove 105.

Referring to FIG. 3B, the first connecting groove 104 of this embodiment is vertically recessed from the upper surface of the upper cover 101 and extends over most of the lateral dimension of the upper cover 101. In this embodiment, a single first connecting member 110 is disposed at a lateral middle position of the first connecting groove 104. In other embodiments, a single first connecting member 110 may be disposed at a side of the first connecting groove 104 in the lateral direction, or a plurality of first connecting members 110 may be distributed along the lateral direction of the first connecting groove 104.

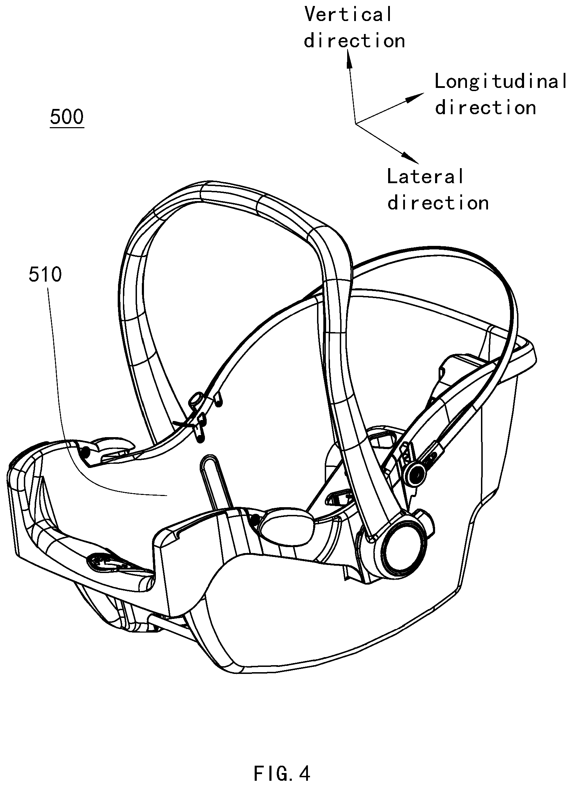

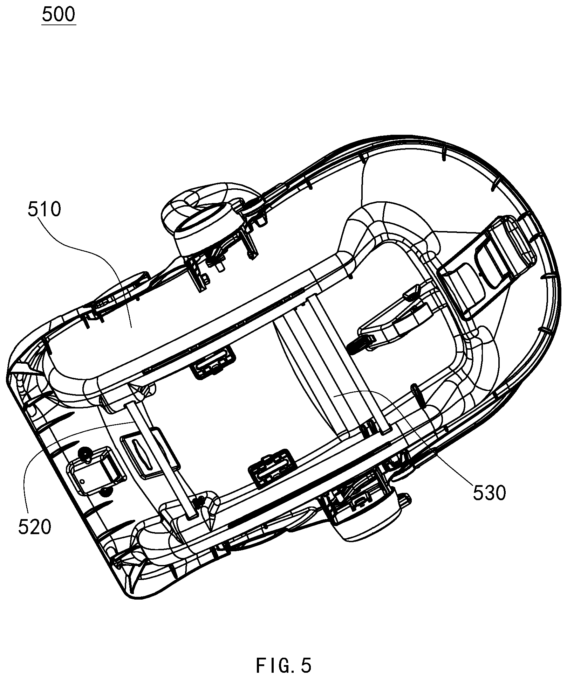

A carrier 500 of a child safety seat according to the present disclosure is described with reference to FIGS. 4 and 5. The carrier 500 has a sitting part 510 for a child to sit on, and a first crossbar 520 and a second crossbar 530 located at a lower surface of the sitting part 510. The first crossbar 520 and the second crossbar 530 may be inserted into the first connecting groove 104 and the second connecting groove 105 of the base 100 and locked by the first connecting member 110 and the second connecting member 120, respectively (see FIG. 2), so that the carrier 500 is firmly engaged to the base 100.

In this embodiment, the carrier 500 is in the form of a sleeping basket. In other embodiments, the carrier 500 may also be in an appropriate form, such as a seat, as long as it has the first crossbar 520 and the second crossbar 530 so as to be engaged to the base 100.

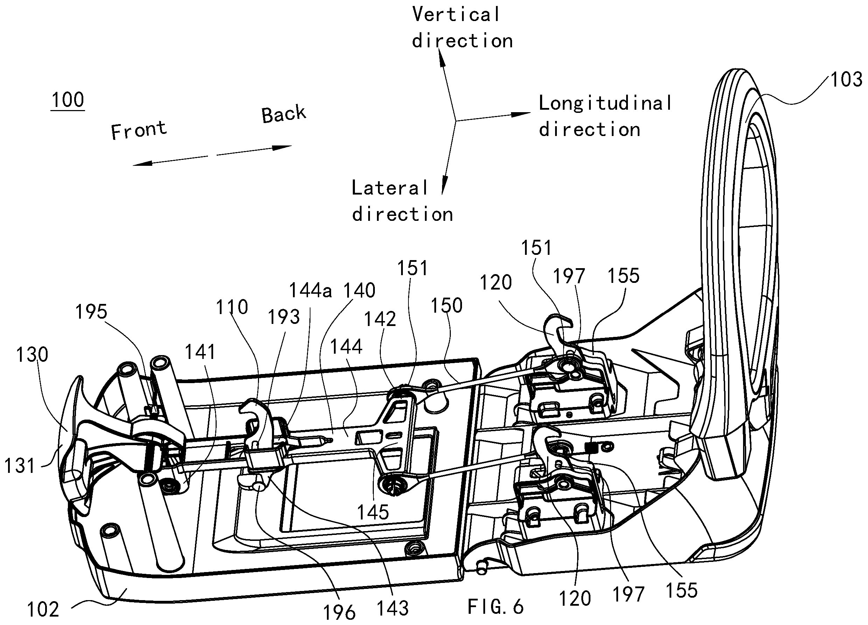

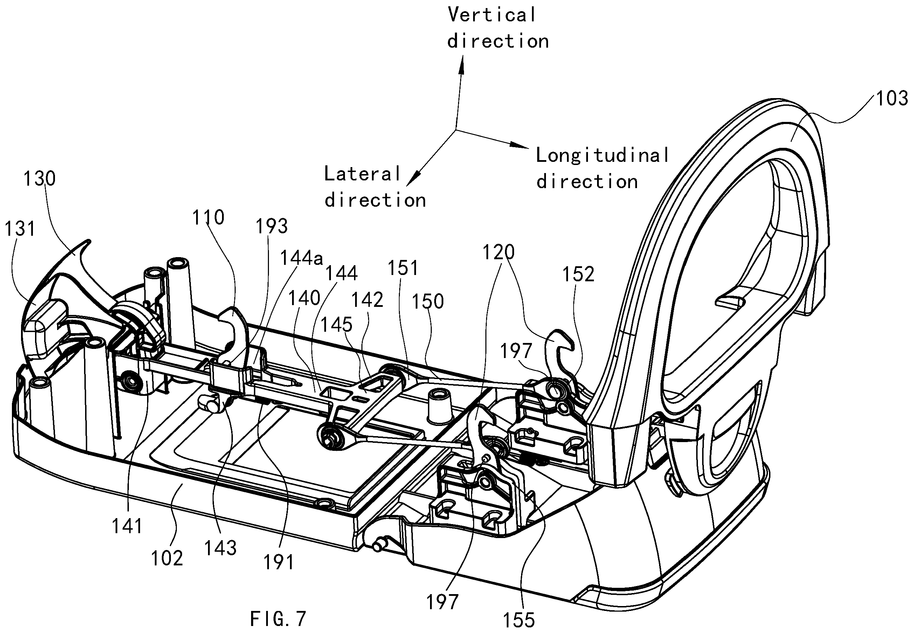

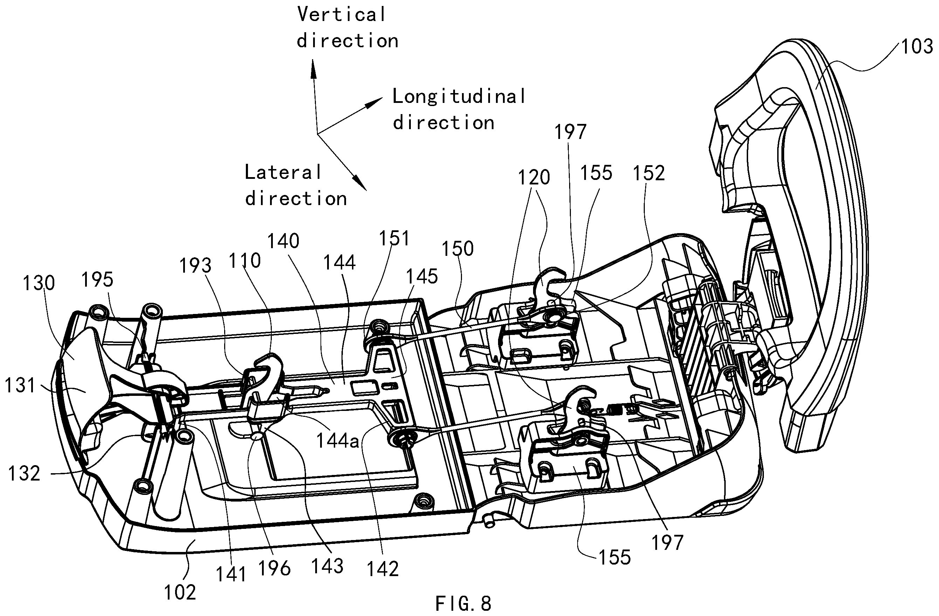

The base 100 of the child safety seat according to the present disclosure is further described with reference to FIGS. 6 to 8. The upper cover 101 of the base 100 is hidden in FIGS. 6 to 8, so that the unlocking member 130, the first connecting member 110 and the second connecting member 120 are completely shown, and a sliding member 140, at least one linkage member 150, a fixing seat 155, a first shaft 193, a second shaft 194, an unlocking member shaft 195, a first driving rod 196 and a second driving rod 197 disposed on the base 100 are also shown.

Generally, the first connecting member 110 and the second connecting member 120 may be operatively engaged to the carrier 500, respectively. That is, the first connecting member 110 and the second connecting member 120 may be switched between a locking position and an unlocking position, respectively, so as to lock or unlock the carrier 500 (specifically, the first crossbar 520 and the second crossbar 530 at a bottom portion of the carrier 500, see FIG. 5).

The unlocking member 130 is exposed to the outside of the base 100 for the user to operate. The sliding member 140 is connected to the unlocking member 130 and may be driven by the unlocking member 130 to drive the first connecting member 110 to disengage with the carrier 500. The linkage member 150 is connected between the sliding member 140 and the second connecting member 120 and may be driven by the sliding member 140 to drive the second connecting member 120 to disengage with the carrier 500.

In this embodiment, the first connecting member 110 and the second connecting member 120 are respectively disposed on the upper cover 101. The unlocking member 130, the sliding member 140 and the linkage member 150 are respectively disposed on the lower cover 102. However, as mentioned above, the upper cover 101 and the lower cover 102 may be form to be integrated, and thus the above components are actually disposed on the body composed of the upper cover 101 and the lower cover 102.

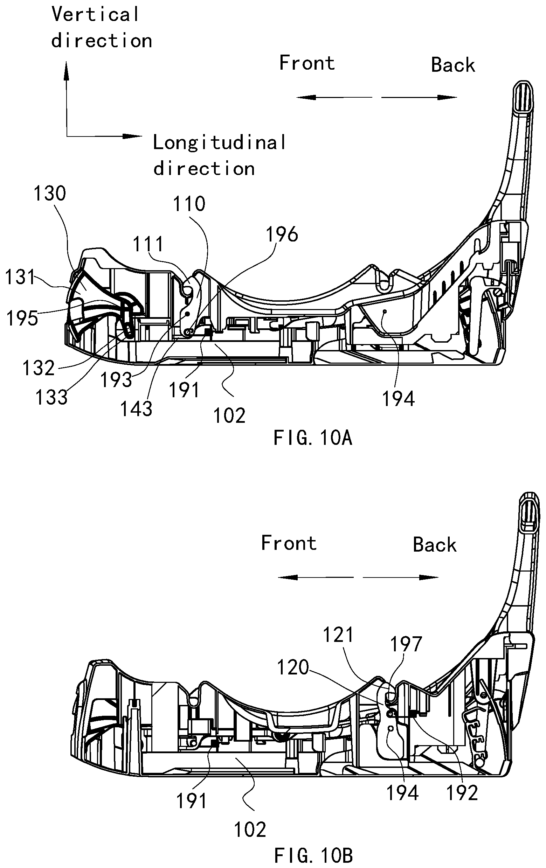

Specifically, the unlocking member 130 is rotatably connected to a front end of the body of the base 100 (specifically, a front end of the lower cover 102) through the unlocking member shaft 195 so as to rotate relative to the body of the base 100 about a lateral axis. The unlocking member 130 includes an unlocking part 131 and an unlocking chute 132. The unlocking member 131 may be operated from the outside of the base 100 to rotate the unlocking member 130 relative to the body of the base 100. For example, the unlocking member 131 may be a handle with an arc profile, so as to provide a good appearance and operation experience. The unlocking chute 132 is connected to a first end 141 (specifically, a front end) of the sliding member 140. More specifically, referring to FIG. 10A, the unlocking chute 132 is a linear groove or a curved groove extending substantially vertically. The first end 141 of the sliding member 140 is provided with an unlocking pin 133, which is fixed to the sliding member 140, for example. The unlocking pin 133 may slide in the unlocking chute 132, so that when the unlocking member 130 rotates relative to the body of the base 100, the unlocking pin 133 moves in a longitudinal direction while sliding along the unlocking chute 132, thereby driving the sliding member 140 to slide in the longitudinal direction, so that the rotation of the unlocking member 130 relative to the body is converted into the sliding of the sliding member 140 along the body.

A main body of the sliding member 140 is a T-shaped long plate extending in the longitudinal direction, with its front end 141 (i.e., a foot end of the T-shaped) connected to the unlocking member 130, and its rear end 142 (i.e., a head end of the T-shaped) connected to the linkage member 150. More specifically, the sliding member 140 includes a longitudinal part 144 and a lateral part 145, and one end of the longitudinal part 144 is connected to the middle of the lateral part 145. An end of the longitudinal part 144 away from the lateral part 145 is connected to the unlocking member 130, and two ends of the lateral part 145 are connected to two linkage members 150 respectively. The longitudinal part 144 is provided with an opening 144a penetrating vertically, through which the first connecting member 110 extends, so that the sliding of the sliding member 140 does not hinder the rotation of the first connecting member 110.

The sliding member 140 is disposed to slide relative to the body of the base 100 (specifically, the lower cover 102) in the longitudinal direction. The sliding member 140 includes a driving part 143 connected to the first driving rod 196. In this embodiment, the driving part 143 is in a shape of a groove extending downward and opening forward, so as to engage the first driving rod 196 and drive the first driving rod 196 to move in the longitudinal direction. More specifically, the driving part 143 is disposed between both ends of the longitudinal part 144 and extends downward. The longitudinal part 144 is connected to the unlocking member 130 through the unlocking pin 133. A contact point between the driving part 143 and the first driving rod 196 and the unlocking pin 133 are both located on a lower side of the longitudinal part 144 and have approximately the same height in a vertical direction. The contact point between the driving part 143 and the first driving rod 196 and the unlocking pin 133 are both located at a lateral center of the base 100 in the lateral direction. That is, the contact point between the driving part 143 and the first driving rod 196 is substantially aligned with the unlocking pin 133 in both the lateral direction and the vertical direction, and spaced apart in the longitudinal direction only, so that a driving force of the unlocking pin 133 can be accurately transmitted to the first driving rod 196 in the longitudinal direction through the sliding member 140, and it is not easy to generate a component force in the lateral direction or the vertical direction. In other embodiments, the driving part 143 may be in any suitable form, such as a ring or a lever, as long as it can drive the first driving rod 196 to move in the longitudinal direction.

The first connecting member 110 is rotatably connected to the body of the base 100, specifically to the upper cover 101 of the base 100, through a first shaft 193 extending transversely. Although the upper cover 101 is not shown in FIGS. 6 to 8, it should be understood that the upper cover 101 has a connecting structure so that both ends of the first shaft 193 are inserted therein. Referring to FIGS. 6 to 8 and 10A, an upper end of the first connecting member 110 is a first hook part 111 that opens forward, and a lower end of the first connecting member 110 is connected to the first driving rod 196. The first driving rod 196 is disposed parallel to and below the first shaft 193. Therefore, the first hook part 111 and the first driving rod 196 are located on opposite sides of the first shaft 193. The counterclockwise rotation direction of the first connecting member 110 in FIG. 10A is the locking rotation direction, and the clockwise rotation direction in FIG. 10A is the unlocking rotation direction.

When the sliding member 140 slides relative to the body of the base 100, the driving part 143 drives the first connecting member 110 through the first driving rod 196 to disengage with the carrier 500. Specifically, the sliding member 140 slides forward under the driving of the unlocking member 130, and the driving part 143 of the sliding member 140 drives the first driving rod 196 to move forward. The first driving rod 196 moving forward drives the first connecting member 110 to rotate in the clockwise direction in FIG. 10A, that is, rotate in the direction of unlocking, so that the first connecting member 110 rotates to the unlocking position.

The first holding member 191 applies a biasing force on the first connecting member 110, and a direction of the biasing force is opposite to a direction in which the sliding member 140 is driven by the unlocking member 130 to slide. Specifically, the first holding member 191 is disposed between the body of the base 100 and the first driving rod 196, and holds the first connecting member 110 to be engaged with the carrier 500. The first holding member 191 may be provided as a tension spring, and both ends of the first holding member 191 are respectively connected to the body of the base 100 and the first driving rod 196, so as to apply a pulling force backward to the first driving rod 196, thereby keeping the first connecting member 110 in the locking position.

Referring to FIGS. 6-8 and 10B, in this embodiment, the linkage member 150 is in the shape of an elongated rod extending substantially in the longitudinal direction, and a front end 151 and a rear end 152 of the linkage member 150 are both in an annular shape. The front end 151 of the linkage member 150 is sleeved at the second end 142 of the sliding member 140, and the second end 142 is in the shape of a rod extending in the lateral direction, for example, extending to left and right sides respectively in the lateral direction, so that the front ends 151 of the two linkage members 150 may be pivotally sleeved at two sides of the second end 142 in the lateral direction respectively. The rear end 152 of the linkage member 150 is sleeved at the second driving rod 197, and the second driving rod 197 is connected to the second connecting member 120. Therefore, when the sliding member 140 slides forward relative to the base 100, the sliding member 140 drives the second driving rod 197 to move forward through the linkage member 150.

The second connecting member 120 is rotatably connected to the body of the base 100 through the second shaft 194, specifically to the fixing seat 155, and the fixing seat 155 is fixed to the bottom of the upper cover 101 of the base 100. The upper end of the second connecting member 120 is a second hook part 121 that opens backward, and the second connecting member 120 is connected to the second driving rod 197 at a position between the second hook part 121 and the second shaft 194. The second driving rod 197 is disposed parallel to and above the second shaft 194. That is, unlike the first connecting member 110, the second driving rod 197 and the second hook part 121 are located on the same side of the second shaft 194. The clockwise rotation direction of the second connecting member 120 in FIG. 10B is the locking rotation direction, and the counterclockwise rotation direction in FIG. 10B is the unlocking rotation direction.

When the sliding member 140 drives the second driving rod 197 to move forward through the linkage member 150, the second driving rod 197 drives the second connecting member 120 to rotate in the counterclockwise direction, that is, rotate in a direction of unlocking, so that the second connecting member 120 rotates to the unlocking position.

The second holding member 192 applies a biasing force on the second driving rod 197, and a direction of the biasing force is opposite to a direction in which the sliding member 140 is driven by the unlocking member 130 to slide. Specifically, the second holding member 192 is disposed between the body of the base 100 and the second driving rod 197 to hold the second connecting member 120 to tend to lock the carrier 500. The second holding member 192 may be provided as a tension spring, and both ends of the second holding member 192 are respectively connected to the body of the base 100 and the second driving rod 197, so as to apply a pulling force backward to the second driving rod 197, thereby keeping the second connecting member 120 in the locking position.

In this embodiment, the front ends 151 of the two linkage members 150 are respectively connected to two lateral ends of the sliding member 140, and the rear ends 152 of the two linkage members 150 are respectively connected to the corresponding second driving rods 197. The two second driving rods 197 are respectively connected to the two second connecting members 120, and the rear ends 152 of the two linkage members 150 are located between the two second connecting members 120. In other embodiments, a single linkage member 150 may be provided, the front end 151 of which is connected to the sliding member 140, and the rear end 152 of which is connected to a single second driving rod 197. Also, the single second driving rod 197 may be connected to two second connecting members 120, for example, extending between the two second connecting members 120 in the lateral direction.

According to the present disclosure, when the sliding member 140 is driven by the unlocking member 130 to slide, the first hook part 111 of the first connecting member 110 and the second hook part 121 of the second connecting member 120 rotate in opposite directions to unlock the carrier 500. Accordingly, when the sliding member 140 is not driven by the unlocking member 130 to slide, the first hook part 111 and the second hook part 121 rotate in opposite directions to each other under the bias of the first holding member 191 and the second holding member 192 to lock the carrier 500. Referring to FIGS. 3A and 3B, when the first connecting member 110 and the second connecting member 120 are in the locking position, the first hook part 111 and the second hook part 121 are exposed above the base 100 through the first connecting groove 104 and the second connecting groove 105, respectively, and cooperate with the first connecting groove 104 and the second connecting groove 105 to form a closed space to lock the first crossbar 520 and the second crossbar 530 (not shown).

Thanks to the structure of the base 100 of the present disclosure, the number of parts of the base 100 can be reduced, especially allowing the use of a single first connecting member 110, which significantly reduces the number of parts compared with the structure of the base 100 using a plurality of first connecting members 110.

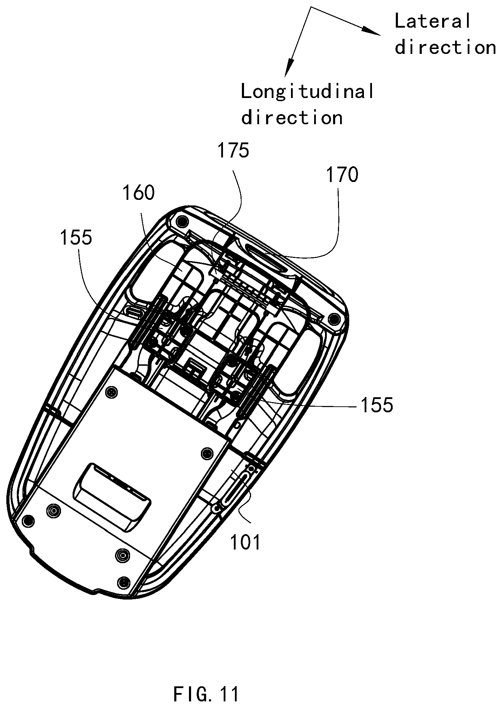

Referring to FIGS. 11 to 12B, the adjustment structure according to the present disclosure is described as a whole, which includes an adjusting member 160, an operating member 170, and a engaging member 175.

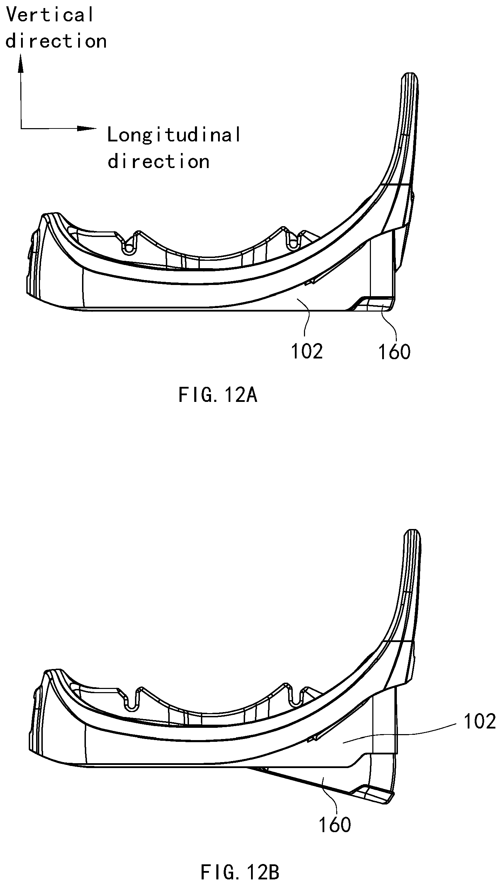

In this embodiment, the adjusting member 160 is a foot pad disposed at a lower rear end 152 of the base 100, which may move between a retracted position shown in FIG. 12A and an extended position shown in FIG. 12B to adjust a pitch angle of the base 100 relative to a vehicle seat (not shown). For example, when the adjusting member 160 is in the retracted position shown in FIG. 12A, a lower surface of the adjusting member 160 is substantially flush with the lower surface of the body of the base 100, so that the base 100 is horizontally placed on the vehicle seat, so that the base 100 (and the entire child safety seat) is substantially horizontally placed. When the adjusting member 160 is in the extended position shown in FIG. 12B, the lower surface of the adjusting member 160 is inclined backward and downward relative to the body of the base 100, so that the rear end of the base 100 is lifted upward, so that the base 100 (and the entire child safety seat) rotates forward. The foot pad may be in a plurality of different extended positions to allow the base 100 to be provided at different pitch angles, and only one of the extended positions is shown in FIG. 12B.

In other embodiments, the adjusting member 160 may be disposed at other appropriate positions of the child safety seat, such as a rear surface, a side surface or the like, to adjust angles of the child safety seat in different directions.

The engaging member 175 is disposed at the rear of the base 100 and may keep the adjusting member 160 in the extended position or the retracted position. The operating member 170 is disposed at the rear of the base 100 and at least partially exposed behind the base 100, so that a user can operate the engaging member 175 to hold the engaging member 175 or release the adjusting member 160.

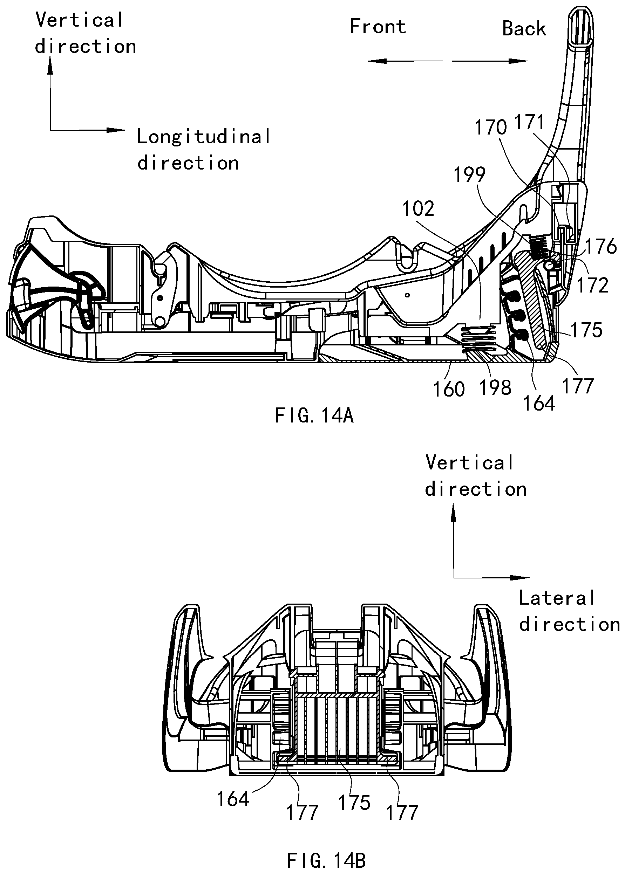

The adjustment structure is further described with reference to FIGS. 14A and 14B.

One end of the adjusting member 160 is rotatably connected to the body of the base 100. Specifically, a front end of the adjusting member 160 is rotatably connected to the body of the base 100, and a connecting structure at the front end will be described in detail below. The other end (i.e., a rear end) of the adjusting member 160 has at least one blocking part 164 arranged along a rotating direction of the adjusting member 160, and each blocking part 164 corresponds to an extended position or a retracted position respectively. The blocking part 164 is a hook extending backward and opening downward. A first elastic member 198, such as a compression spring, is disposed between the body of the base 100 (specifically, the lower cover 102) and the adjusting member 160 to bias the adjusting member 160 to the extended position.

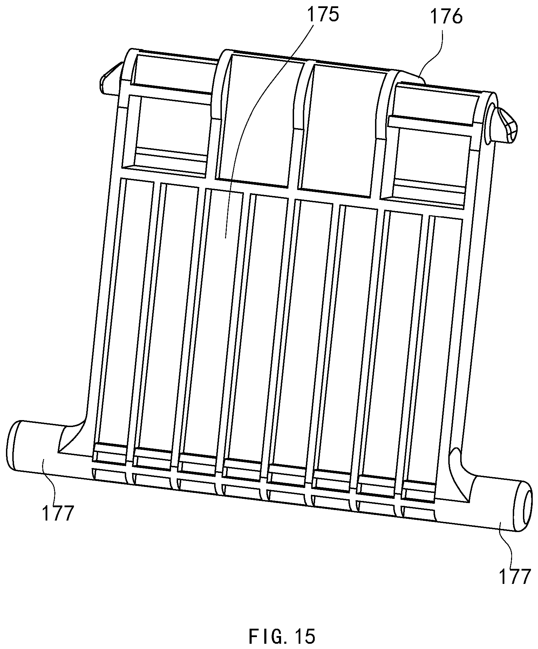

Referring to FIGS. 14A, 14B and 15, the engaging member 175 may be engaged with any blocking part 164 to keep the adjusting member 160 in the extended position or the retracted position. Specifically, the engaging member 175 is rotatably connected to the base 100, and is in a substantially L-shape in a side sectional view (i.e., FIG. 14A). The engaging member 175 is rotatably connected to the base 100 at a corner of the L-shape, and includes an arm 176 and an engaging part 177 respectively located at both ends of the L-shape. The arm 176 extends substantially rearward from a rotation axis of the engaging member 175 and is engaged to the operating part 171 so as to be driven by the operating part 171. The engaging part 177 is disposed at a lower end of the engaging member 175 and may be engaged with and stopped at the blocking part 164 of the adjusting member 160.

A second elastic member 199 is disposed between the body of the base 100 and the engaging member 175 to bias the engaging member 175 toward a position where the adjusting member 160 is engaged. For example, one end of the second elastic member 199 abuts against the lower surface of the lower cover 102 of the base 100, and the other end abuts against the upper surface of the arm 176.

In this embodiment, the adjusting member 160 and the engaging member 175 rotate relative to the body of the base 100 about the lateral axis, respectively, and the engaging part 177 extends in the lateral direction, so as to facilitate the compactness of the adjustment structure. In other embodiments, the adjusting member 160 and the engaging member 175 may also be disposed in other appropriate forms, such as moving linearly with respect to the base 100, respectively.

Referring to FIG. 14C, the operating member 170 includes an operating part 171 and a transmission rod 172. The operating part 171 may be operated from the outside of the base 100, for example, in the form of a handle. The transmission rod 172 is engaged to the lower surface of the arm 176 of the engaging member 175 to drive the engaging member 175 to rotate against the biasing force of the second elastic member 199. The transmission rod 172 is, for example, a rod extending in the lateral direction so as to be stably engaged to the arm 176.

In this embodiment, the operating member 170 is disposed to move vertically relative to the base 100 to drive the engaging part 177 of the engaging member 175 to rotate in a direction away from the adjusting member 160 relative to the base 100. When the user does not operate the operating member 170, the engaging member 175 tends to rotate in the clockwise direction in FIG. 14A under the action of the second elastic member 199, so that the engaging part 177 is engaged to any blocking part 164 of the adjusting member 160, thereby keeping the adjusting member 160 in the retracted position or the extended position.

When the user moves the operating member 170 upward, the driving rod 172 of the operating member 170 drives the arm 176 of the engaging member 175 to move against the bias of the second elastic member 199, so that the engaging member 175 rotates in the counterclockwise direction in FIG. 14A, so that the engaging part 177 is away from the adjusting member 160 and engaged from the blocking part 164. At this time, the adjusting member 160 tends to move to the extended position under the bias of the first elastic member 198, and the user may press the base 100 relative to the vehicle seat (or other surface where the base 100 is located) to move the adjusting member 160 to the retracted position. Then, the user releases the operating member 170, so that the engaging member 175 keeps the position of the adjusting member 160 again.

Due to the adjusting structure of the present disclosure, the adjusting member 160 can be held or released by the linearly moving operating member 170.

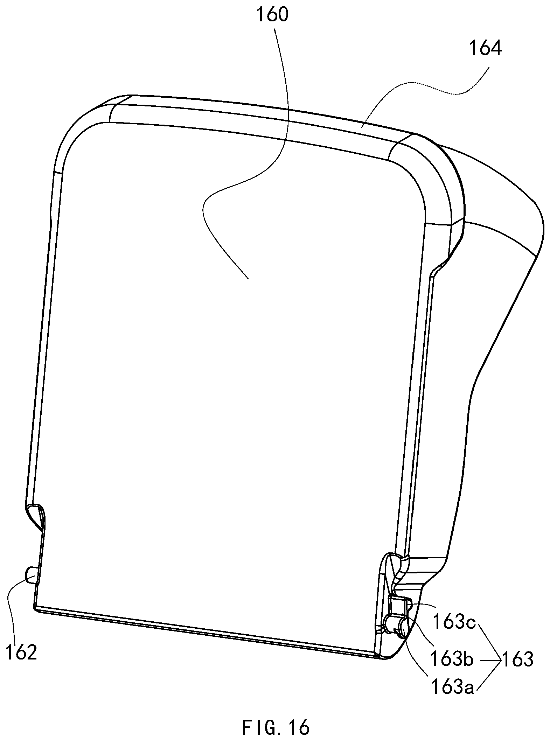

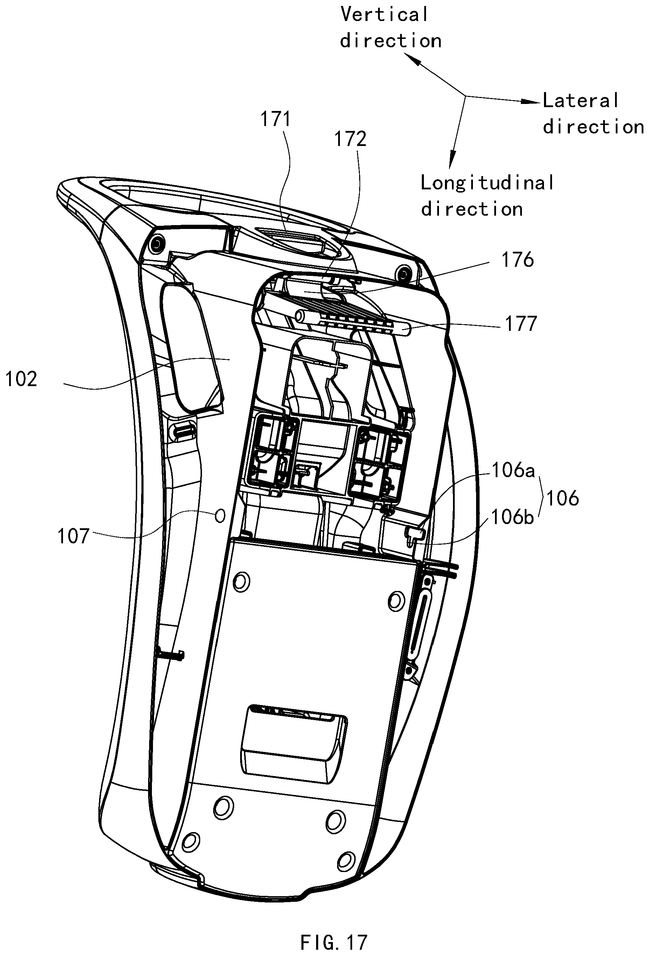

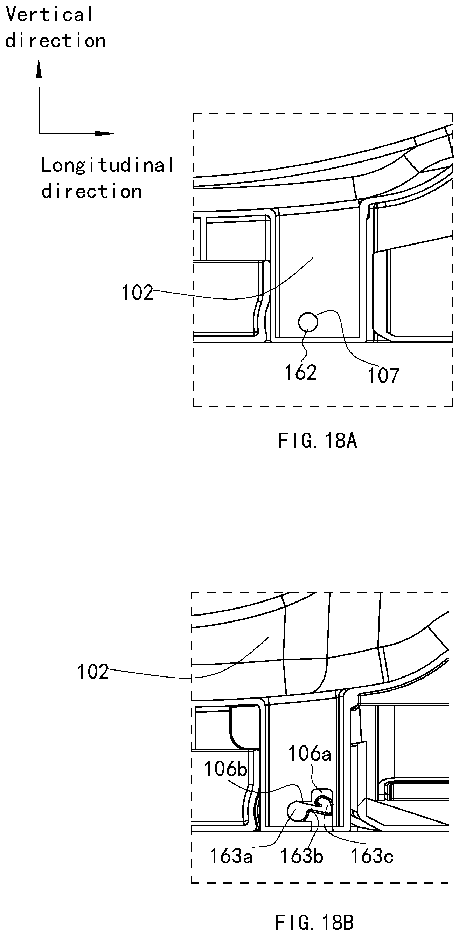

With reference to FIGS. 16 to 18B, the assembly relationship between the adjusting member 160 and the base 100 will be further described.

The adjusting member 160 is connected to the body of the base 100 through a first pivot part 162 and a second pivot part 163 which are opposite to each other. The first pivot part 162 is pillar-shaped, and the second pivot part 163 includes a pivot shaft 163a, an extending part 163b and a protruding part 163c. The pivot shaft 163a extends opposite to the first pivot part 162. The extending part 163b extends radially outward from a periphery of the pivot shaft 163a. The protruding part 163c extends from an end of the extending part 163b away from the pivot axis 163a, and is located on both sides of the extending part 163b with the pivot shaft 163a.

The body of the base 100 has a circular hole 107 on a side connected to the adjusting member 160, and a special-shaped groove 106 on the opposite side. The special-shaped groove 106 is provided to allow the second pivot part 163 to slide into the special-shaped groove 106 from the outside of the base 100 in a state that the first pivot part 162 of the adjusting member 160 is inserted into the circular hole 107, and keep the pivoting shaft 163a of the second pivot part 163 rotating in the special-shaped groove 106.

More specifically, the special-shaped groove 106 includes a guide part 106a and an accommodating part 106b. The guide part 106a vertically extends to the outside of the base 100, and is engaged with the protruding part 163c of the second pivot part 163 to prevent the second pivot part 163 from being engaged from the special-shaped groove 106. The accommodating part 106b extends from the guide part 106a in the longitudinal direction and accommodates the pivot shaft 163a of the second pivot part 163.

In the process of assembling the adjusting member 160 to the body of the base 100, the first pivot part 162 is first inserted into the circular hole 107, and then the pivot shaft 163a of the second pivot part 163 is moved into the accommodating part 106b through the guide part 106a of the special-shaped groove 106, and thus it is beneficial to the simple assembly of the adjusting member 160.

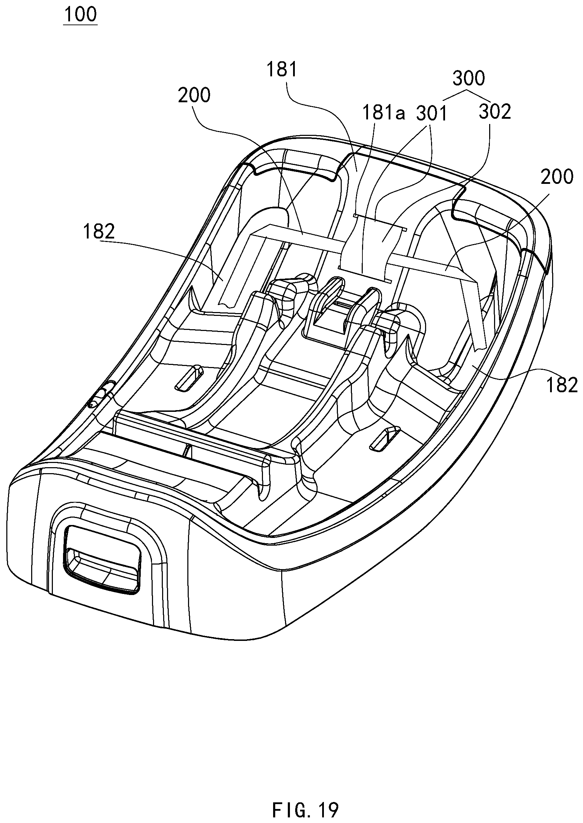

A first embodiment of a limiting member 300 according to the present disclosure will be described with reference to FIG. 19.

The child safety seat includes a connecting strap 200 for connecting the base 100 to the vehicle seat (not shown). Specifically, at least a portion of the connecting strap 200 is connected to an upper side portion of the base 100 (specifically, the upper surface 181 of the base 100), and the connecting strap 200 passes through the base 100 from above to below the base 100 (i.e., below in FIG. 19) and is connected to the vehicle seat, thereby installing the base 100 to the vehicle seat.

In this embodiment, a middle section of the connecting strap 200 is connected to the upper side portion of the base 100, and both ends of the connecting strap 200 respectively pass through the base 100 to below the base 100.

The base 100 is provided with a penetrating opening 182 penetrating through the base 100, and the connecting strap 200 may pass through the penetrating opening 182 from the upper surface 181 of the base 100 to the bottom portion of the base 100. In this embodiment, two penetrating openings 182 are respectively disposed on two lateral sides of the base 100 to allow both ends of the connecting strap 200 to pass through the base 100.

It should be understood that the connecting strap 200 slides relative to the base 100 rather than being not fixed to the base 100. In order to limit the sliding range of the connecting strap 200 relative to the base 100 in the longitudinal direction, especially to prevent the connecting strap 200 from sliding excessively relative to the base 100 in the longitudinal direction to hinder the second connecting member 120 (see FIG. 2), the base 100 is provided with a limiting channel for the connecting strap 200 to pass through, which movably connects the connecting strap 200 to the base 100 and is located between two penetrating openings 182.

Specifically, the limiting channel is provided by the limiting member 300 provided on the base 100. The limiting member 300 is a belt or a plate crossing with the connecting strap 200. For example, the connecting strap 200 extends in the lateral direction and the limiting member 300 extends in the longitudinal direction, so that the limiting member 300 intersects with the connecting strap 200. The limiting member 300 has two ends 301 and a middle section 302 located between the two ends. The two ends 301 are connected to the upper surface 181 of the base 100, so that a limiting channel is formed between the middle section 302 and the upper surface 181 of the base 100. A width of the limiting channel is close to that of the connecting strap 200, thus preventing the connecting strap 200 from sliding up and down in the longitudinal direction relative to the base 100 in the limiting channel.

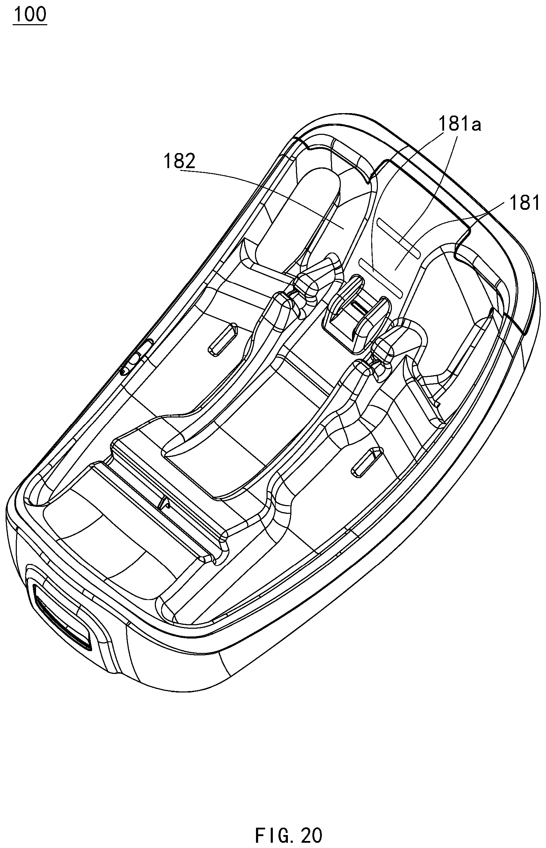

Referring to FIGS. 19 and 20, in this embodiment, the upper surface 181 of the base 100 is provided with two upper surface limiting holes 181a, and the two ends 301 of the limiting member 300 are fixed to the two upper surface limiting holes 181a respectively. More specifically, two ends 301 of the limiting member 300 respectively pass through two upper surface stopper holes 181a from above, and are tied under the upper surface 181 to be fixed to the upper surface. In other embodiments, the two ends 301 of the limiting member may be fixed to the upper surface 181 of the base 100 in other ways, such as snapping-on, winding, hook-and-loop or the like.

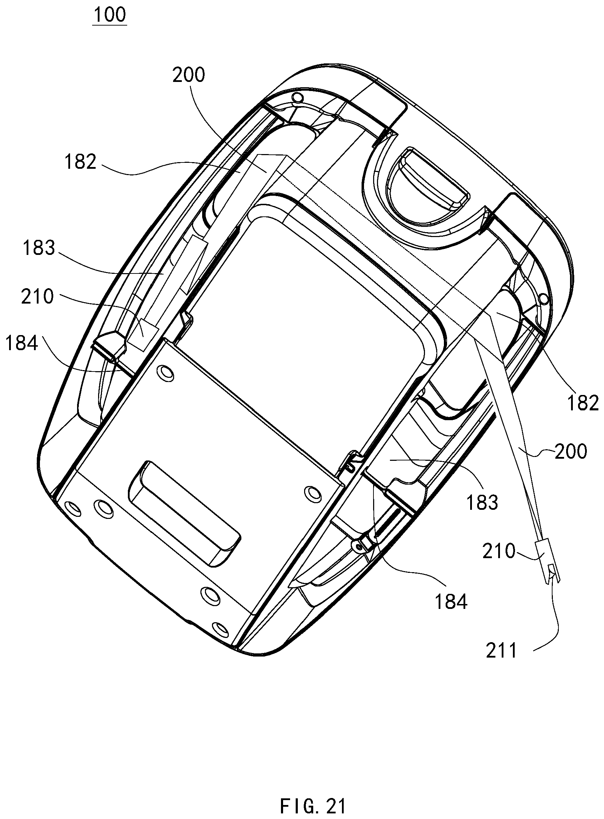

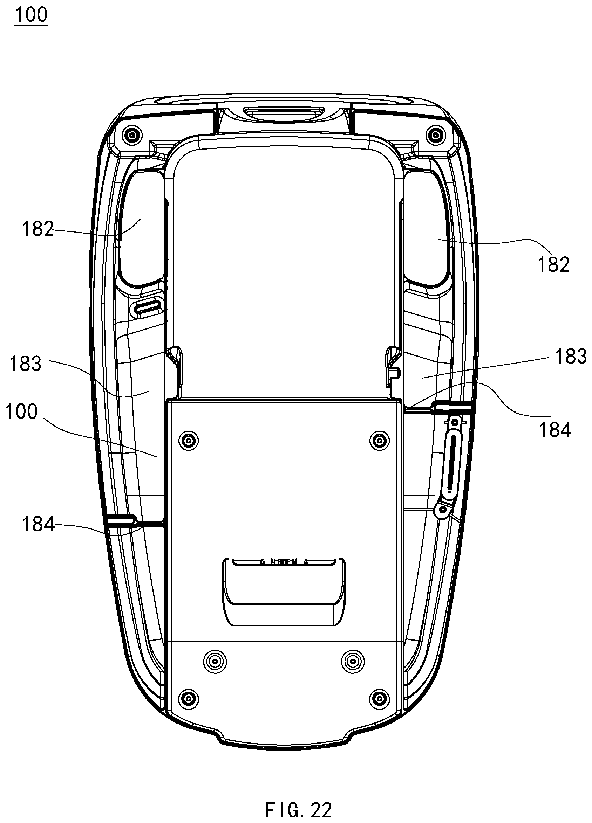

Referring to FIGS. 21 and 22, two ends of the connecting strap 200 respectively extend below the base 100 through the through holes 182 located at both sides of the base 100. Both ends of the connecting strap 200 are respectively provided with anchoring joints 210. The anchoring joint 210 may be engaged with a corresponding fitting (not shown) on the vehicle seat, so that the base 100 is installed to the vehicle seat. A receiving structure is provided below the base 100 to receive the connecting strap 200 and the anchoring joint 210 when the base 100 is not connected to the vehicle seat using the connecting strap 200.

Specifically, the bottom of the base 100 is provided with a receiving groove 183, and the receiving groove 183 may receive at least one of the connecting strap 200 and the anchoring joint 210. More specifically, the receiving groove 183 is a groove that is recessed upward from the bottom surface of the base 100. The two receiving grooves 183 are respectively disposed at two lateral sides of the base 100 and extend substantially in the longitudinal direction. FIG. 21 schematically shows a state in which the connection strap 200 is folded and received in the receiving groove 183. It should be understood that the connecting strap 200 may be a flexible strap, and thus may be wound, folded or twisted so as to be received in the receiving groove 183.

The two anchoring joints 210 are respectively connected to two ends of the connecting strap 200. The anchoring joint 210 is, for example, in the form of a buckle and has an engaging hook 211 so as to be connected to the vehicle seat.

A receiving engagement rod 184 is provided in the receiving groove 183, and the engaging hook of the anchoring joint 210 may be engaged to the receiving engagement rod 184. Specifically, the receiving engagement rod 184 extends substantially in the lateral direction and is located at an opening of the receiving groove 183. Therefore, when the connecting strap 200 is accommodated in the accommodating groove 183, the anchoring joint 210 may be easily engaged to the accommodating engagement rod 183. In this embodiment, two receiving engagement rods 184 are respectively disposed at the receiving grooves 183 located at both lateral sides of the base 100, and the two receiving engagement rods 184 are disposed at different longitudinal positions of the base 100. That is, a distance between the receiving engagement rod 184 on one side and the penetrating opening 182 is larger than that between the receiving engagement rod 184 on the other side and the penetrating opening 182, in other words, a position of the receiving engagement rod 184 on one side is closer to the front of the base 100 than that of the receiving engagement rod 184 on the other side (i.e., lower left in FIG. 21). On the side with a larger distance between the receiving engagement rod 184 and the penetrating opening 182, a larger receiving space is provided for the connecting strap 200, so that a length adjusting device (not shown) of the connecting strap 200 may be received. The length adjusting device may adopt the technology known in the art, and the detailed description thereof is omitted herein.

FIG. 21 shows a state in which the anchoring joint 210 is not engaged with the receiving engagement rod 183, so as to clearly show the receiving engagement rod 183. The anchoring joint 210 may be provided with an automatic or manual operation structure known in the art, so that the engaging hook 211 is engaged to the receiving engagement rod 183.

An end of the receiving engagement rod 184 connected to an outer side wall of the receiving groove 183 is thicker than a middle part of the receiving engagement rod 184 to increase the strength of the receiving engagement rod 184.

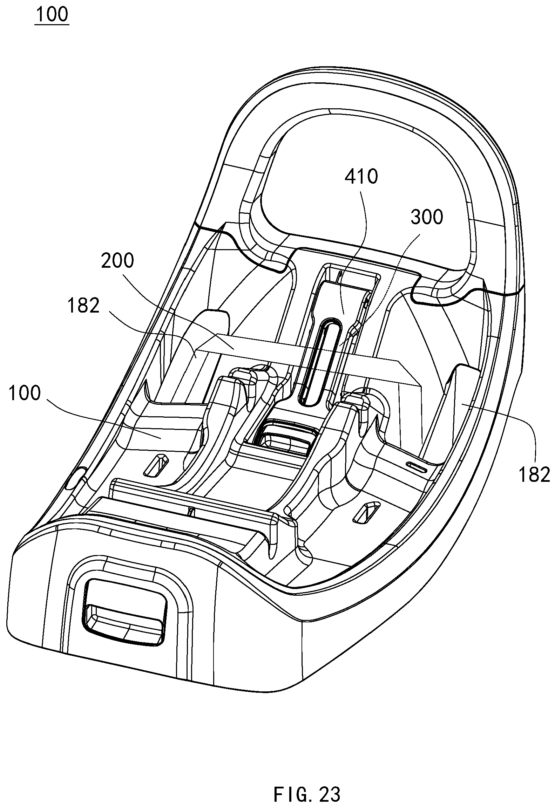

A second embodiment of the limiting member 300 according to the present disclosure will be described with reference to FIGS. 23 to 25. The limiting member 300 of the second embodiment is similar to the first embodiment. The difference between the two embodiments is that the second embodiment is also provided with a gripper 410 and a gripper groove 420 which may be covered by the gripper 410 on the base 100.

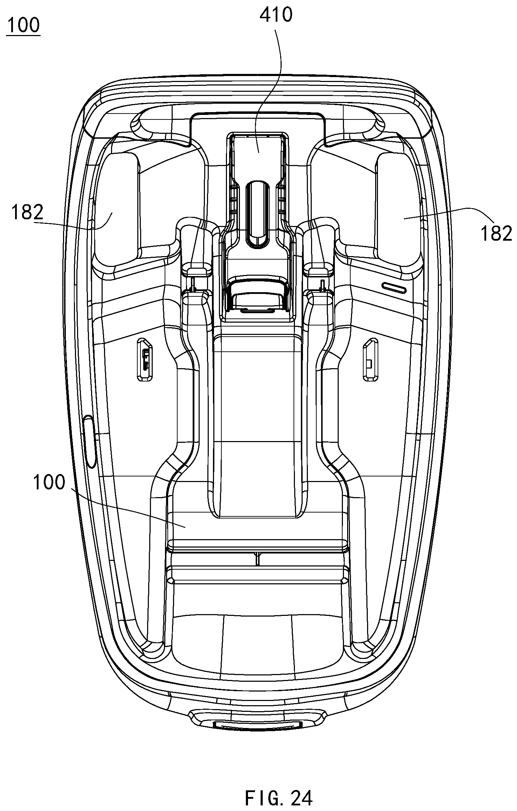

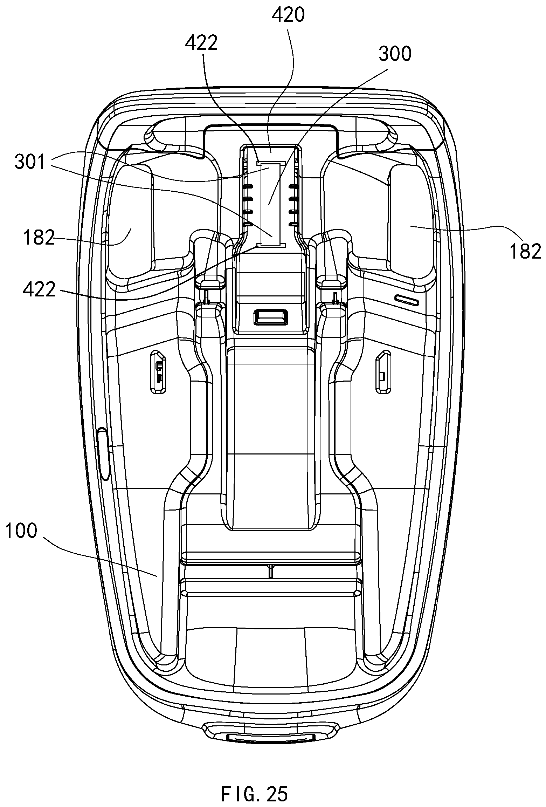

Specifically, the gripper 410 is disposed on the base 100 and may rotate about the lateral axis relative to the base 100 between the closed position shown in FIGS. 23 and 24 and the open position shown in FIG. 25. When the gripper 410 is in the closed position, it fits the base 100 and covers the gripper groove 420, the limiting member 300 and at least a part of the connecting strap 200. When the gripper 410 is in the open position, it rises from the base 100, and exposes the gripper groove 420, the limiting member 300, and the connecting strap 200.

The gripper groove 420 is a groove that is recessed downward from the upper surface 181 of the base 100. The limiting member 300 has two ends 301 fixed to the gripper groove 420, so that the limiting channel is formed between the middle section 302 and the bottom surface 421 of the gripper groove 420. More specifically, the bottom surface 421 of the gripper groove 420 is provided with two gripper groove limiting holes 422. The two ends 301 of the limiting member 300 are respectively fixed to the two gripper groove limiting holes 422, so that the limiting member 300 is stably fixed to the gripper groove 420. Thanks to the gripper groove 420 and the gripper 410, the connecting strap 200 is more stably held to the base 100.

Although preferred embodiments are shown and described herein, it should be understood that these embodiments are given by way of example only. Many variations, changes and substitutions will occur to those skilled in the art without departing from the spirit of the present disclosure. Therefore, the appended claims are intended to cover all such modifications as fall within the spirit and scope of the present disclosure.

## Claims

1. A child safety seat, **characterized in that**, the child safety seat comprises:
a base (100);
a carrier (500) detachably connected to the base (100);
wherein the base (100) is provided with:
at least one first connecting member (110) and at least one second connecting member (120) operatively engaged to the carrier (500), respectively;
an unlocking member (130);
a sliding member (140) connected to the unlocking member (130) and capable of being driven by the unlocking member (130) to slide along a body of the base (100) to drive the first connecting member (110) to disengage with the carrier (500); and
at least one linkage member (150) connected between the sliding member (140) and the second connecting member (120), and capable of being driven by the sliding member (140) to drive the second connecting member (120) to disengage with the carrier (500).

2. The child safety seat according to claim 1, wherein:
the sliding member (140) and the linkage member (150) are pivotally connected with each other, and the sliding member (140) slides along the body of the base (100), and drives the linkage member (150) to slide along the body of the base (100), so that sliding of the sliding member (140) along the body is converted into synchronous rotation of the first connecting member (110) and the second connecting member (120) relative to the body of the base (100) to disengage with the carrier (500).

3. The child safety seat according to claim 1, wherein:
the sliding member (140) is disposed at a lateral center of the base (100), and the sliding member (140) is driven at its front end (141) by the unlocking member (130) to slide along the body of the base (100), and thus drives the first connecting member (110) to rotate at its middle portion in a longitudinal direction, and synchronously drives two linkage members (150) that are horizontally parallel to each other at its rear end (142).

4. The child safety seat according to claim 1, wherein:
the sliding member (140) and the linkage member (150) are connected at an angle.

5. The child safety seat according to claim 1, wherein:
the sliding member (140) comprises a longitudinal part (144) and a lateral part (145), and one end of the longitudinal part (144) is connected to a middle of the lateral part (145), an end of the longitudinal part (144) away from the lateral part (145) is connected to the unlocking member (130), and two ends of the lateral part (145) are connected to two linkage members (150), respectively.

6. The child safety seat according to claim 1, wherein:
the sliding member (140) comprises a longitudinal part (144) and a lateral part (145), and one end of the longitudinal part (144) is connected to a middle of the lateral part (145), the longitudinal part (144) is provided with an opening (144a) penetrating vertically, and the first connecting member (110) extends through the opening (144a).

7. The child safety seat according to claim 1, wherein:
one first connecting member (110) is disposed at a front portion of the base (100), and two second connecting members (120) are disposed in parallel at a rear portion of the base (100), the first connecting member (110) is disposed at a lateral center of the base (100).

8. The child safety seat according to claim 1, wherein:
the first connecting member (110) is pivotally connected to the body of the base (100) through a lateral first shaft (193) and includes a first hook part (111); and
the sliding member (140) comprises a driving part (143) connected to the first connecting member (110), and the first hook part (111) and the driving part (143) are located at opposite sides of the first shaft (193).

9. The child safety seat according to claim 8, wherein:
the base (100) comprises a first driving rod (196) which is disposed parallel to the first shaft (193) and connected below the first shaft (193), and when the sliding member (140) slides relative to the body, the driving part (143) drives the first connecting member (110) through the first driving rod (196) to disengage with the carrier (500).

10. The child safety seat according to claim 9, wherein:
the sliding member (140) comprises a longitudinal part (144) and a lateral part (145), and one end of the longitudinal part (144) is connected to a middle of the lateral part (145), the longitudinal part (144) is connected to the unlocking member (130) through an unlocking pin (133);
a contact point between the driving part (143) and the first driving rod (196) and the unlocking pin (133) are both located at a lower side of the longitudinal part (144) and have approximately the same height in a vertical direction.

11. The child safety seat according to claim 8, wherein:
the first connecting member (110) comprises the first hook part (111) that opens forward, and the sliding member (140) comprises the driving part (143) that opens forward.

12. The child safety seat according to claim 1, wherein:
the base (100) comprises at least one second driving rod (197);
two ends of the linkage member (150) are respectively connected to the sliding member (140) and the second driving rod (197), so that when the sliding member (140) slides relative to the body of the base (100), the linkage member (150) drives the second connecting member (120) through the second driving rod (197) to disengage with the carrier (500);
the second connecting member (120) is pivotally connected to the body of the base (100) through a lateral second shaft (194) and comprises a second hook part (121); and
the second driving rod (197) is disposed parallel to the second shaft (194), and the second driving rod (197) and the second hook part (121) are located at the same side of the second shaft (194).

13. The child safety seat according to claim 1, wherein:
the first connecting member (110) comprises a first hook part (111) at its upper end, and the second connecting member (120) comprises a second hook part (121) at its upper end;
when the sliding member (140) is driven by the unlocking member (130) to slide, the first hook part (111) and the second hook part (121) rotate in opposite directions to disengage with the carrier (500).

14. The child safety seat according to claim 1, wherein:
the child safety seat further comprises a connecting strap (200) for connecting the base (100) to a vehicle seat,
wherein the base (100) is provided with a limiting channel through which the connecting strap (200) passes, and the limiting channel connects the connecting strap (200) to the base (100), the limiting channel is provided by a limiting member (300) disposed on the base (100);
the limiting member (300) has two ends (301) and a middle section (302) located between the two ends (301), and the two ends (301)are connected to an upper surface (181) of the base (100), so that the limiting channel is formed between the middle section (302) and the upper surface (181) of the base (100).

15. The child safety seat according to claim 14, wherein:
the upper surface (181) of the base (100) is provided with two upper surface limiting holes (181a), and the two ends (301) of the limiting member (300) are respectively fixed to the two upper surface limiting holes (181a).

16. The child safety seat according to claim 1, wherein:
the child safety seat further comprises a connecting strap (200) for connecting the base (100) to a vehicle seat,
wherein the base (100) is provided with a limiting channel through which the connecting strap (200) passes, and the limiting channel connects the connecting strap (200) to the base (100), the limiting channel is provided by a limiting member (300) disposed on the base (100), the base (100) is provided with a gripper (410) and a gripper groove (420) which is capable of being covered by the gripper (410),
the limiting member (300) has two ends (301) and a middle section (302) located between the two ends (301), and the two ends (301) are fixed to the gripper groove (420), such that the limiting channel is formed between the middle section (302) and a bottom surface (421) of the gripper groove (420).

17. The child safety seat according to claim 16, wherein:
the bottom surface (421) of the gripper groove (420) is provided with two gripper groove limiting holes (422), and two ends (301) of the limiting member (300) are respectively fixed to the two gripper groove limiting holes (422).

18. The child safety seat according to claim 1, wherein:
the child safety seat further comprises a connecting strap (200) for connecting the base (100) to a vehicle seat, an end of the connecting strap (200) is provided with an anchoring joint (210) which is capable of being engaged with a corresponding fitting on the vehicle seat, and
a bottom portion of the base (100) is provided with a receiving groove (183) which is capable of receiving the anchoring joint (210) therein;
a receiving engagement rod (184) is provided in the receiving groove (183), and an engaging hook (211) of the anchoring joint (210) is capable of being engaged to the receiving engagement rod (184).

19. A child safety seat, **characterized in that** the child safety seat comprises a base (100), and the base (100) comprises:
an adjusting member (160) movable between at least an extended position and a retracted position relative to the body of the base (100);
an engaging member (175) capable of keeping the adjusting member (160) in the extended position or the retracted position; and
an operating member (170) capable of operating the engaging member (175) to enable the engaging member (175) to hold the adjusting member (160) or disengage with the adjusting member (160).

20. The child safety seat according to claim 19, wherein:
one end of the adjusting member (160) is rotatably connected to the body of the base (100), and the other end of the adjusting member (160) is provided with at least one blocking part (164), and the blocking part (164) respectively corresponds to the extended position or the retracted position; and
the engaging member (175) is capable of being engaged with any one of the blocking parts (164) to keep the adjusting member (160) in the extended position or the retracted position.

21. The child safety seat according to claim 20, wherein:
a plurality of the blocking parts (164) are arranged along a rotating direction of the adjusting member (160).

22. The child safety seat according to claim 19, wherein:
the adjusting member (160) is connected to the body of the base (100) through a first pivot part (162) and a second pivot part (163) which are opposite to each other;
the first pivot part (162) is pillar-shaped;
the second pivot part (163) comprises:
a pivot shaft (163a) extending opposite to the first pivot part (162);
an extending part (163b) extending radially outward from a periphery of the pivot shaft (163a); and
a protruding part (163c) extending from an end of the extending part (163b) away from the pivot shaft (163a), and the protruding part (163c) and the pivot shaft (163a) are located at two sides of the extending part (163b) respectively.

23. The child safety seat according to claim 20, wherein:
the engaging member (175) is rotatably connected to the body of the base (100) and comprises:
an arm (176) connected to the operating member (170) so as to be driven by the operating member (170); and
an engaging part (177) which is capable of being engaged with the blocking part (164) of the adjusting member (160).

24. The child safety seat according to claim 19, wherein:
the adjusting member (160) and the engaging member (175) are configured to rotate relative to the body of the base (100) about a lateral axis respectively, and the engaging part (177) extends in a lateral direction.

25. The child safety seat according to claim 23, wherein:
the operating member (170) comprises:
an operating part (171) which is capable of being operated from outside of the base (100); and
a transmission rod (172) engaged to the arm (176) of the engaging member (175) to drive the engaging member (175).

26. The child safety seat according to claim 19, wherein:
the operating part (170) is disposed to move vertically relative to the body of the base (100) to drive an engaging part (177) of the engaging member (175) to rotate in a direction away from the adjusting member (160) relative to the body of the base (100).
